Europäisches Patentamt

European Patent Office

Office européen des brevets

(11) Veröffentlichungsnummer : **0 029 608**
B1

# (12) EUROPÄISCHE PATENTSCHRIFT

(45) Veröffentlichungstag der Patentschrift :
03.08.83

(21) Anmeldenummer : 80107325.5

(22) Anmeldetag : 24.11.80

(51) Int. Cl.³ : **B 29 D   9/00**, B 29 C  17/03,
B 29 D  27/00

(54) Verfahren zur Herstellung von mit einem Schaumstoff ausgeschäumten Kunststoff-Folientiefziehteilen.

(30) Priorität : 26.11.79 DE 2947573
14.07.80 DE 3026645

(43) Veröffentlichungstag der Anmeldung :
03.06.81 Patentblatt 81/22

(45) Bekanntmachung des Hinweises auf die Patenterteilung : 03.08.83 Patentblatt 83/31

(84) Benannte Vertragsstaaten :
AT BE CH DE FR GB IT LI LU NL SE

(56) Entgegenhaltungen :
DE A 1 629 395
DE A 2 017 552
DE A 2 264 523
DE A 2 718 510
DE B 1 406 000
DE U 66 022 85

(73) Patentinhaber : Alkor GmbH Kunststoffverkauf
Morgensternstrasse 9 Postfach 71 0109
D-8000 München 71 (DE)

(72) Erfinder : Landler, Josef
Schiessstättstrasse 84
D-8190 Wolfratshausen (DE)
Erfinder : Berger, Maximilian
Poignring 14
D-8190 Wolfratshausen (DE)

(74) Vertreter : Weickmann, Heinrich, Dipl.-Ing. et al
Patentanwälte Dipl.-Ing. H. Weickmann Dipl.-Phys.Dr.
K. Fincke Dipl.-Ing. F.A. Weickmann Dipl.-Chem. B.
Huber Dr.-Ing. H. Liska Möhlstrasse 22
D-8000 München 86 (DE)

Verfahren zur Herstellung von mit einem Schaumstoff ausgeschäumten Kunststoff-Folientiefziehteilen

Die Erfindung betrifft ein Verfahren nach dem Oberbegriff des Anspruchs 1.

Es besteht häufig die Notwendigkeit, eine tiefziehfähige Folie, z. B. aus einer PVC-ABS-Abmischung in einem Verarbeitungswerk tiefzuziehen und danach mit Schaumstoff auf der sichtflächenfernen Seite zu hinterschäumen. Das Hinterschäumen erfolgt in Aufschäumungsformen, die in der Regel keine Sicherheit dagegen bieten, daß an den Formschließstellen aufschäumendes oder noch nicht aufgeschäumtes Material auch auf die Sichtseite der tiefgezogenen Folie gelangt. Dieses auf die Sichtseite gelangende Schaumstoffmaterial, das in der Regel Polyurethan-Schaumstoffmaterial ist, kann sich dabei an der Sichtseite des tiefgezogenen Folienzuschnitts festsetzen und läßt sich später von der Sichtseite nicht mehr lösen, so daß das ganze Formteil Ausschuß bildet.

Um dem abzuhelfen, ist es bekannt geworden, auf den Tiefziehfolienzuschnitt eine Wachsschicht aufzubringen, und zwar dadurch, daß in die Schäumform auf der der Sichtseite zugewandten Seite ein flüssiges Wachs aufgetragen wird, welches sich wenigstens teilweise auf die Sichtseite des Tiefziehfolienzuschnitts überträgt. Der Wachsauftrag erfolgt an denjenigen Stellen, an denen mit Schaumeinwirkung auf die Sichtseite gerechnet werden kann. In diesen Bereichen wird die Sichtfläche des Tiefziehfolienteils mit einer zusammenhängenden Wachsschicht bedeckt. Zusätzlich oder alternativ ist es auch bekannt, das tiefgezogene Kunststoffolienformteil auf seiner Sichtseite mit Wachs vor dem Einlegen in die Schäumform zu besprühen. Die Wachsschicht reduziert das Festhaften etwa übertretenden Schaumes an der Sichtseite, so daß der Schaum nach dem Entnehmen aus der Tiefziehform von der Sichtseite erleichtert abgezogen werden kann. Beim Abziehen des Schaumes von der Sichtseite bleibt jedoch mindestens ein Teil des Wachses, d. h. insbesondere in denjenigen Bereichen, in denen kein Schaum übergetreten ist, an der Sichtseite der tiefgezogenen Folie haften. Diese Wachsreste sind aber unerwünscht und müssen anschließend in einem Waschvorgang von der Sichtseite abgewaschen werden. Dies ist mühsam und führt zu Ungleichmäßigkeiten in der Sichtseitenoberfläche, da die Folie durch den Waschvorgang angegriffen werden kann. Ein gleichmäßiges Abwaschen des Wachses ist kaum möglich. Auch hat sich gezeigt, daß trotz einer vorhandenen Wachsschicht der Schaumstoff eine gut haftende Verbindung mit der Sichtseite des tiefgezogenen Folienzuschnitts eingehen kann, so daß das Abziehen dieser Schaumstoffreste mühsam und oft unzureichend ist. Dabei ist insbesondere auch zu beachten, daß die Folie auf ihrer Sichtseite häufig bereits mit einem Lack versehen ist und gerade dieser Lack ist gegen den Wachsabwaschvorgang sehr empfindlich, da dieser Wachsabwaschvorgang mit einem Lösungsmittel vorgenommen werden muß, welches unvermeidlich auch den Lack mit angreift.

Aus der DE-A-16 29 395 ist es bekannt, eine Schichtfolie mit einer Schutzfolie, insbesondere einer PVC-Haut zu beschichten, um die Oberfläche der Schichtfolie bei der Bearbeitung und Behandlung sowie beim Transport zu schützen, wobei die Schutzfolie später, insbesondere durch Abschälen von der Schichtfolie getrennt werden soll. Dabei ist insbesondere auch schon an den Schutz von Lackierungen und Prägungen gedacht, welche die Sichtfläche der Schichtfolie besonders verletzlich machen.

Weiterhin ist es aus der DE-A-27 18 510 bekannt, eine zur thermoplastischen Verformung bestimmte Platte mit einer Schutzschicht aus Polyäthylen zu versehen, die Platte mit der Schutzschicht nach vorangehender Thermoplastifizierung gemeinsam zu verformen, beispielsweise zu einer Badewanne, auf die Unterseite der Badewanne dann eine festigkeitserhöhende Schicht aus Polyesterharz und Glasfasern aufzubringen und die Schutzschicht an Ort und Stelle zu lassen, zumindest bis der Verstärkungsvorgang beendet ist. Dadurch soll verhindert werden, daß die Glasfasern und das Harz mit dem nach unten gezogenen Rand der Badewanne in Berührung kommen, wodurch ein nachfolgendes Reinigen des Rands zum Entfernen jeglichen abgelagerten Materials vermieden werden soll. Auch kann die schützende Folie an Ort und Stelle belassen werden, um zufällige Beschädigungen möglichst zu vermeiden bis das Bad vollständig installiert ist und die Wasseranschlußarbeiten durchgeführt sind. Die Folie soll erst dann abgezogen werden, wobei sie gleichzeitig dazu dient, Abfälle einzusammeln, die während der Arbeiten in die Badewanne gefallen sein können.

Abriebempfindliche Plattenoberflächen sollen durch die Schutzfolie vor Abrieb geschützt werden.

Der Erfindung liegt die Aufgabe zugrunde, ein Verfahren nach dem Oberbegriff des Anspruchs 1 so auszugestalten, daß das mühsame und häufig zur Beeinträchtigung der Tiefziehfolienoberfläche führende Reinigen der Tiefziehfolienoberfläche von dem Schutzwachsfilm vermieden wird und das Abnehmen von Schaumstoffverunreinigungen auf der Sichtseite der Tiefziehfolienoberfläche weiter vereinfacht wird, wobei etwaige Mehrkosten in Grenzen gehalten werden sollen.

Zur Lösung dieser Aufgabe werden die Maßnahmen nach dem kennzeichnenden Teil des Anspruchs 1 vorgeschlagen.

Die Verbindung zwischen der Schutzfolie und der Sichtseite der Tiefziehfolie muß dabei natürlich so sein, daß das Abziehen der Schutzfolie ohne Zerstörung der Sichtfläche der Tiefziehfolie erfolgen kann.

Es hat sich gezeigt, daß bei dem erfindungsgemäßen Verfahren die Schichtstärke (Dicke) der Tiefziehfolie reduziert werden kann. Ist eine Schutzfolie nicht vorhanden, so ist eine bestimmte Mindestdicke der Tiefziehfolie erforderlich, einmal um eine ausreichende Steifigkeit der Tiefziehfolie für das Entformen aus der Tiefziehform und für die Weiterverarbeitung zu gewährleisten. Es hat sich nun gezeigt, daß bei dem erfindungsgemäßen Verfahren die Mindestdicke der Tiefziehfolie durch das Vorhandensein der Schutzfolie reduziert werden kann, weil die Schutzfolie zu einer erhöhten Steifigkeit beiträgt. Demnach kann die Dicke der Tiefziehfolie unter das bisher für erforderlich gehaltene Mindestmaß herabgesetzt werden, ohne daß wegen des Vorhandenseins der Schutzfolie eine unerwünschte Verminderung der Steifigkeit eintritt. Durch die Reduzierung der Dicke der Tiefziehfolie werden die Gesamtkosten reduziert, jedenfalls wird aber ein Teil der für die Schutzfolie aufzuwendenden Kosten durch die Reduzierung der Schichtstärke der Tiefziehfolie ohne Inkaufnahme anderer Nachteile aufgefangen. Hinzu kommt, daß die Reduzierung der Schichtstärke der Tiefziehfolie am fertigen Endprodukt häufig aus Gewichtsgründen erwünscht ist, beispielsweise im Flugzeugbau und im Automobilbau.

Das erfindungsgemäße Verfahren verspricht darüber hinaus besondere Vorteile dann, wenn die Tiefziehfolie gemäß Anspruch 2 auf ihrer Sichtseite insbesondere durch Prägen mit einer Feinstruktur versehen worden ist. Unter Feinstruktur werden insbesondere Oberflächenmuster verstanden, welche unabhängig von der beim späteren Tiefziehvorgang sich ergebenden Form sind. Während nun bei den Verfahren mit Wachsauftrag das Tiefziehen häufig eine unerwünschte Verformung der Feinstruktur hinterließ und häufig auch ein unerwünschter Glanz der Sichtseite der Tiefziehfolie zu verzeichnen war, so zeigt es sich, daß bei dem erfindungsgemäßen Verfahren die Feinstruktur im wesentlichen erhalten bleibt und ein Glanz nicht auftritt. Diese Erscheinung ist nicht voll erklärt. Denkbar ist folgender Wirkungsmechanismus : beim Aufheizen der Tiefziehfolie für den nachfolgenden Tiefziehvorgang durch Wärmeeinstrahlung, insbesondere durch Wärmeeinstrahlung von der Sichtseite her, tritt — jedenfalls dann, wenn eine transparente Schutzfolie gemäß Anspruch 12 verwendet wird — in der Schutzfolie eine wesentlich geringere Wärmeabsorption auf als in der Tiefziehfolie selbst. Die Schutzfolie bleibt deshalb im Vergleich zu der Tiefziehfolie relativ kühler, ungeachtet natürlich der Notwendigkeit auch die Schutzfolien auf eine Temperatur zu erhöhen, die den Tiefziehvorgang zuläßt. Diese Schutzfolie liegt nun an der Oberflächenschicht der Tiefziehfolie an, welche die Feinstruktur aufweist, und zwar liegt sie insbesondere an den erhabenen Flächenbereichen dieser Feinstruktur an. Die besonders stark aufgeheizte Oberflächenschicht der Tiefziehfolie kann deshalb durch Wärmeabführung in die Schutzfolie vor Überhitzung bewahrt werden. Dies dürfte die vorteilhafte Folge auslösen, daß beim Tiefziehen die Feinstruktur weniger plastisch ist als sie es bei nicht Vorhandensein der Schutzfolie wäre, so daß die Feinstruktur erhalten bleibt und Glanzeffekte vermieden werden.

Da die Schutzfolie, wie dargelegt, die Narbbeständigkeit und die Glanzvermeidung begünstigt, ist es auch unter dem Gesichtspunkt der Narbbeständigkeit und der Glanzvermeidung möglich, die Dicke der Tiefziehfolie unter das bisher für notwendig gehaltene Maß zu verringern. Gemäß Anspruch 4 eignen sich als Tiefziehfolien beispielsweise PVC-ABS-Folien.

Es hat sich gezeigt, daß das erfindungsgemäße Verfahren auch dann besondere Vorteile bietet, wenn gemäß Anspruch 5 eine Tiefziehfolie verwendet wird, welche auf ihrer Sichtseite mit einer Lackschicht, beispielsweise aus PVC-Acrylatlack beschichtet ist. Die Verbindung zwischen der Schutzfolie und der Tiefziehfolie kann nämlich, ggf. nach einfachen Vorversuchen, leicht so ausgeführt werden, daß das Abziehen der Schutzfolie ohne Beeinträchtigung einer vorhandenen Lackschicht auf der Tiefziehfoliensichtseite erfolgen kann. Jedenfalls entfällt das bei dem zum Stand der Technik gehörigen Verfahren notwendige Waschen, für welches die Lackschicht auf der Sichtseite der Tiefziehfolie besonders anfällig war.

Gemäß Anspruch 6 kann als Schutzfolie eine Folie verwendet werden, welche zumindest an ihrer der Sichtseite der Tiefziehfolie zugekehrten Seite einen Anteil an haftungsvermittelnd wirkendem polymerisiertem Äthylenvinylacetat enthält. Es hat sich gezeigt, daß eine solche Äthylenvinylacetatschicht mit den häufig zur Lackierung der Tiefziehfolie verwendeten PVC-Acrylatlacken gut verträglich ist und die Haftung ohne weiteres so eingestellt werden kann, daß ein Abziehen der Schutzfolie von der Tiefziehfolie ohne Beschädigung von deren sichtseitiger Lackschicht möglich ist.

Besonders gute Ergebnisse wurden erzielt, indem gemäß Anspruch 7 eine Schutzfolie verwendet wurde, welche an ihrer der Sichtseite der Tiefziehfolie zugekehrten Seite aus einem Kopolymerisat von Äthylen und Äthylenvinylacetat besteht.

Gemäß Anspruch 8 kann ggf. auch eine mehrschichtige, z. B. coextrudierte Schutzfolie verwendet werden, beispielsweise eine, deren der Sichtseite der Tiefziehfolie zugekehrte Schicht Äthylenvinylacetat enthält.

Gemäß Anspruch 9 wird eine mehrschichtige Schutzfolie verwendet, deren von der Sichtseite der Tiefziehfolie abgelegene Schicht eine hohe Weiterreißfestigkeit besitzt, um das Abziehen der Schutzfolie von der Tiefziehfolie zu erleichtern. Als Schicht mit hoher Weiterreißfestigkeit kommt beispielsweise Polyäthylen in Frage, welches sich mit einer äthylenvinylacetathaltigen Schicht, insbesondere mit einer aus einem Kopolymerisat von Äthylen und Äthylenvinylacetat bestehenden Schicht gut haftend verbindet.

Die für den Zusammenhalt beim Tiefzieh- und Ausschäumvorgang ausreichende, aber doch wieder lösbare Haftung zwischen der Schutzfolie und der Tiefziehfoliensichtseite kann beispielsweise durch Kalandrieren der Schutzfolie auf die Tiefziehfolie erzielt werden. Dabei wirkt der Äthylenvinylacetatgehalt ggf. im Sinne einer Haftvermittlung.

Gemäß Anspruch 10 können die Schutzfolie und die Tiefziehfolie auch nach vorangehender Koronabehandlung wenigstens einer ihrer einander zugekehrten Seiten zusammenkaschiert werden, um die Haftung zu optimieren.

Die optimale Haftung der Schutzfolie an der Tiefziehfolie, insbesondere an der Lackschicht der Tiefziehfolie, kann durch einfache Vorversuche ermittelt werden, wobei die Intensität der Koronabehandlung und/oder die Vereinigungstemperatur und/oder der Vereinigungsdruck und/oder der Gehalt an haftvermittelnden Komponenten insbesondere an Äthylenvinylacetat als variable Parameter zur Verfügung stehen.

Eine etwaige Lackschicht, insbesondere PVC-Acrylat-Lackschicht kann auf der Tiefziehfolie durch eine Druckwalze aufgetragen sein.

Es hat sich gezeigt, daß die Haftung zwischen der Schutzfolie und der Sichtseite der Tiefziehfolie bzw. dem auf dieser Sichtseite aufgebrachten Lack gemäß Anspruch 11 auf 1 bis 10 N/5 cm bei einer Abzugsgeschwindigkeit von 100 mm/min. eingestellt werden kann um einerseits die richtige, den Tiefziehvorgang und das Ausschäumen überdauernde Haftung zu erzielen und andererseits dennoch die Schutzfolie leicht und möglichst ohne Einreißen abziehen zu können. Auch hier lassen sich ggf. durch einfache Vorversuche die optimalen Werte leicht ermitteln.

Gemäß Anspruch 13 kann durch Auswahl des Wellenlängenspektrums des zur Erhitzung vor dem Tiefziehen verwendeten Strahlers dafür gesorgt werden, daß in der Schutzfolie nur eine definierte Wärmeabsorption eintritt, die einerseits ausreicht, um auch die Schutzfolie in einen für den Tiefziehvorgang ausreichenden plastischen Zustand zu versetzen, andererseits aber gering genug ist, um eine ausreichende Wärmeabführung von der Feinstruktur in die Schutzfolie zu gewährleisten und damit eine Beeinträchtigung der Feinstruktur und Glanzeffekte zu vermeiden.

Die Dicke der Tiefziehfolie und die Dicke der Schutzfolie können auch durch einfache Vorversuche auf das optimale Maß abgestimmt werden, wobei die Dicke der Tiefziehfolie unter das bisher für erforderlich gehaltene Mindestmaß herabgesetzt werden kann, ohne daß — wegen des Vorhandenseins der Schutzfolie — eine unerwünschte Verminderung der Steifigkeit, eine unerwünschte Veränderung der Prägung und eine unerwünschte Glanzbildung eintreten.

Die beiliegenden Figuren erläutern die Erfindung anhand von Ausführungsbeispielen. Es stellen dar:

Figur 1 einen Zuschnitt des tiefziehfähigen Materials mit einer einschichtigen Schutzfolie;

Figur 2 einen Zuschnitt entsprechend Fig. 1 mit einer zweischichtigen Schutzfolie;

Figur 3 den Zuschnitt gemäß Fig. 1 nach erfolgter Tiefziehverformung;

Figur 4 den tiefgezogenen Zuschnitt gemäß Fig. 3 nach erfolgter Hinterschäumung;

Figur 5 den tiefgezogenen und hinterschäumten Zuschnitt gemäß Fig. 4 nach Abziehen der Schutzfolie;

Figur 6 einen Schnitt durch eine Tiefziehfolie mit geprägter Feinstruktur und Schutzfolie;

Figur 6a eine abgewandelte Ausführungsform mit zweischichtiger Schutzfolie;

Figur 7 einen Zuschnitt gemäß Fig. 6 nach dem Tiefziehvorgang;

Figur 8 einen tiefgezogenen Zuschnitt gemäß Fig. 7 nach dem Hinterschäumen der Rückseite; und

Figur 9 einen Formkörper gemäß Fig. 8 nach dem Abziehen der Schutzfolie.

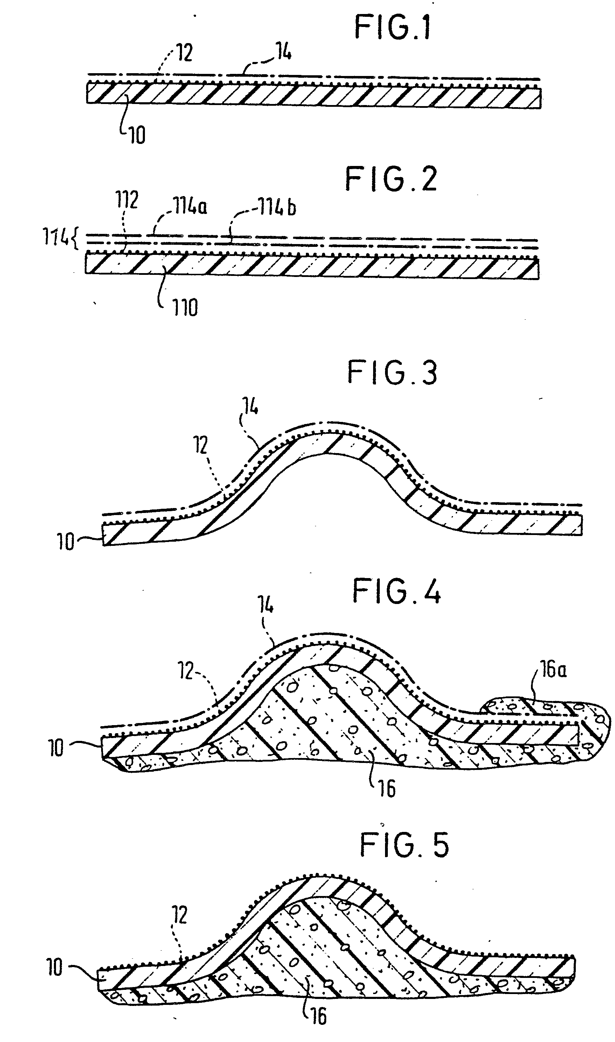

In Fig. 1 ist ein Zuschnitt des tiefziehfähigen Materials mit 10 bezeichnet. Dieser Zuschnitt besteht beispielsweise aus einem im Kalander verarbeiteten PVC-ABS-Material. Der Zuschnitt 10 ist auf seiner im Betrieb sichtbaren Sichtseite mit einer durch Punkte angedeuteten Lackschicht 12 versehen. Die Lackschicht 12 besteht beispielsweise aus einem PVC-Acrylatlack. Auf die Lackschicht 12 ist eine Schutzfolie 14 aufkalandriert. Die Schutzfolie 14 besteht beispielsweise aus einem Mischpolymerisat von Äthylen und Äthylenvinylacetat. Diese Schutzfolie 14 ist auf die Lackschicht 12 aufkalandriert, vorzugsweise nach vorhergehender Koronavorbehandlung der Schutzfolie.

In Fig. 2 sind gleiche Teile mit gleichen Bezugsziffern versehen wie in Fig. 1, jeweils vermehrt um 100. Die Schutzfolie 114 besteht nach der Alternative gemäß Fig. 2 aus einer Polyäthylenschicht 114a und einer polymerisierten Äthylenvinylacetatschicht 114b als Haftvermittlerschicht.

In Fig. 3 erkennt man den Zuschnitt 10 gemäß Fig. 1 nach erfolgtem Tiefziehen.

In Fig. 4 ist der tiefgezogene Zuschnitt 10 mit einem Schaum, z. B. einem Polyurethanschaum 16 hinterspritzt. Man erkennt, daß der Zuschnitt 10 (infolge unzureichenden Formschlusses der Hinterschäumungsform) auch auf seiner Sichtseite mit Schaumstoff 16a belegt ist.

In Fig. 5 erkennt man das Produkt gemäß Fig. 4 nach Abziehen der Schutzfolie 14, wodurch auch die Schaumstoffbeläge auf der Sichtseite des Zuschnitts 10 entfernt sind.

Die Haftung der Schutzfolie 14 an der Oberfläche 10 des Zuschnitts bzw. an der Lackschicht 12 ist so eingestellt, daß sie in den Verfahrensstufen bis zur Gewinnung des Produkts gemäß Fig. 4 erhalten bleibt, daß aber dann die Schutzfolie 14 ohne Beschädigung der Oberfläche des Zuschnitts bzw. der Lackschicht 12 abgezogen werden kann. Die mechanische Festigkeit der Schutzfolie 14 ist unter Berücksichtigung der Haftung an dem Zuschnitt 10 bzw. der Lackschicht 12 so eingestellt, daß die Schutzfolie 14 im wesentlichen ohne Einreißen und als ein Stück abgezogen werden kann. Entsprechendes gilt für den Fall gemäß Fig. 2, wo die Schutzfolie 114 als Verbundfolie ausgebildet ist. Im Fall der Verbundfolie 114 muß die Haftung zwischen den einzelnen Schichten 114a und 114b größer sein als die Haftung der Haftvermittlerschicht 114b zur Oberfläche des Zuschnitts 110 bzw. der Lackschicht 112.

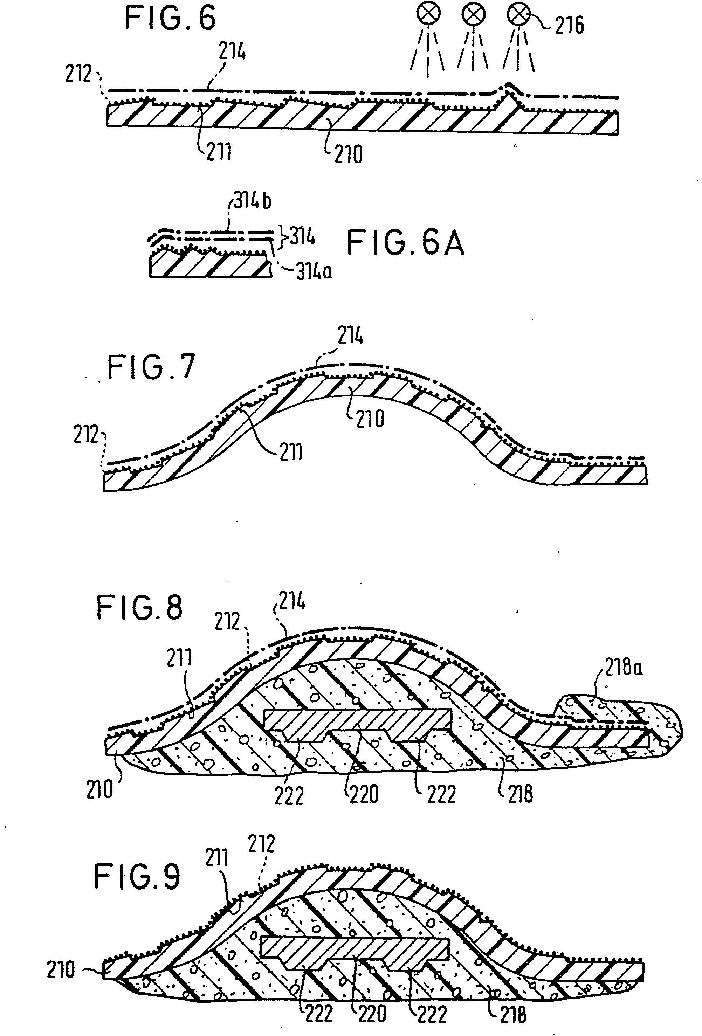

In Fig. 6 ist mit 210 eine Tiefziehfolie bezeichnet, die beispielsweise aus einer PVC-ABS-Mischung besteht. Die Oberfläche 211 dieser Tiefziehfolie ist durch vorangegangenes Prägen, beispielsweise im Kalander, mit einer Feinstruktur versehen worden. Auf die feinstrukturierte Oberfläche 211 (Sichtseite) ist eine durch Punkte angedeutete Lackschicht 212 aufgetragen, beispielsweise aufgerastert, wobei die Prägung vorzugsweise nach der Lakkierung stattgefunden hat. Auf die lackierte und geprägte Oberfläche 211 ist eine Schutzfolie 214 aufkaschiert. Die Schutzfolie besteht beispielsweise aus polymerisiertem Äthylenvinylacetat oder aus einer Mischung davon mit Polyäthylen. Durch den Vinylacetatanteil in dem Polymerisat und/oder den Polymerisatanteil in der Mischung ist die Haftung der Schutzfolie an der lackierten Oberfläche 211 derart eingestellt, daß sie während der nachfolgenden Verarbeitungsvorgänge haften bleibt, nach Fertigstellung des Endprodukts aber abgezogen werden kann. Für die Haftung der Schutzfolie 214 an der Oberfläche 211 ist auch eine etwaige vorherige Koronabehandlung mindestens einer der einander zugekehrten Oberflächen und/oder die Temperatur und/oder der Druck beim Kaschiervorgang verantwortlich.

In Fig. 6a ist eine Abwandlung dargestellt, bei welcher die Schutzfolie 314 aus einer Haftvermittlerschicht 314a und einer weiteren Schicht 314b besteht. Dabei besteht die Haftvermittlerschicht 314a wiederum aus polymerisiertem Äthylenvinylacetat oder einer Mischung von Polyäthylen und polymerisiertem Äthylenvinylacetat, während die andere Schicht 314b beispielsweise aus Polyäthylen besteht. Bei der Auswahl des Werkstoffs für die Schicht 314b wird besonders auf eine hohe Einreißfestigkeit und Weiterreißfestigkeit geachtet, um das spätere Abziehen der Schutzfolie 314 möglichst in einem Stück zu ermöglichen.

Fig. 6 zeigt weiter Infrarotstrahler 216, welche vor dem Tiefziehen der Tiefziehfolie zu deren Erwärmung durch die transparente Schutzfolie 214 hindurch eingesetzt werden.

In Fig. 7 erkennt man den Verbundkörper bestehend aus der Tiefziehfolie 210 und der Schutzfolie 214 nach dem Tiefziehen.

In Fig. 8 erkennt man das Tiefziehformteil 210 nach dem Hinterschäumen mit einem Schaumstoff, insbesondere Polyurethanschaumstoff 218. Dabei ist in den Schaum ein Versteifungskörper 220 mit eingeschäumt, welcher mit Befestigungsansätzen 222 versehen sein kann, etwa um den Formkörper gemäß Fig. 8 an einem zu verkleidenden Teil zu befestigen.

In Fig. 9 ist die Schutzfolie 214 abgezogen, wobei Schaumstoffverunreinigungen 218a, welche gemäß Fig. 8 unbeabsichtigterweise auf die Sichtseite gelangt sind, mit entfernt sind.

Die Dicke der Tiefziehfolie liegt beispielsweise zwischen 0,50 mm bis 1,2 mm. Die Dicke der Schutzfolie liegt beispielsweise zwischen 80 und 150 μ. Die Schutzfolie ist zwar relativ teuer, indes wird ein Teil der Kosten für die Schutzfolie dadurch wieder aufgehoben, daß die Tiefziehfolie entsprechend dünner gewählt werden kann. Bei dem erfindungsgemäßen Verfahren entfallen auch die umständlichen zeitraubenden und kostenerhöhenden Schritte des Wachsauftragens und des Waschvorgangs, so daß auch hierdurch die höheren Kosten der Schutzfolie in Kauf genommen werden können.

## Ansprüche

1. Verfahren zur Herstellung von Formkörpern, welche aus einem tiefgezogenen Tiefziehfolienzuschnitt (10 ; 110 ; 210) aus Kunststoff (z. B. aus PVC-ABS) bestehen und auf ihrer Rückseite ausgeschäumt sind, wobei auf der Sichtseite des Tiefziehfolienzuschnitts (10 ; 110 ; 210) eine Schutzschicht aufgebracht wird, welche das Anhaften von etwa auf die Sichtseite der Tiefziehfolie (10 ; 110 ; 210) übertragenem Schaum (16a) an der Sichtfläche verhindert, dadurch gekennzeichnet, daß die Schutzschicht in Form einer Schutzfolie (14 ; 114 ; 214 ; 314) bereits vor dem Tiefziehen aufgebracht wird, welche mit der Sichtseite der Tiefziehfolie (10 ; 110 ; 210) eine den Tiefziehvorgang und den Ausschäumvorgang überdauernde Haftverbindung eingeht, jedoch andererseits an der Tiefziehfolie nur so weit haftet, daß nach Fertigstellung des Formteils die Schutzfolie (14 ; 114 ; 214 ; 314) mit etwa an ihr haftendem Schaum (16a) möglichst ohne Einreißen wieder von der Sichtseite abgezogen werden kann, wobei die Schutzfolie (14 ; 114 ; 214 ; 314) in ihrer Dicke und stofflichen Zusammensetzung derart gewählt wird, daß sie dem aus Tiefziehfolie (10 ; 110 ; 210) und Schutzfolie (14 ; 114 ; 214 ; 314) bestehenden Verbundmaterial die für die Verarbeitung notwendigen Eigenschaften, insbesondere Steifigkeit, Narbstabilität und Beständigkeit der optischen Reflexionseigenschaften verleiht, so daß die Tiefziehfolie (10 ; 110 ; 210) entsprechend dünner gewählt werden kann.

2. Verfahren nach Anspruch 1, dadurch gekennzeichnet, daß die Schutzfolie (214) auf eine vorher, insbesondere durch Prägen mit einer Feinstruktur versehenen Sichtseite (211) der Tiefziehfolie (210) aufgebracht wird.

3. Verfahren nach Anspruch 1 oder 2, dadurch gekennzeichnet, daß die Tiefziehfolie (210) vor dem Tiefziehen durch Wärmebestrahlung, insbesondere auch von der Sichtseite her, erhitzt und dadurch in einen plastischer Verformung fähigen Zustand gebracht wird.

4. Verfahren nach einem der Ansprüche 1 bis 3, dadurch gekennzeichnet, daß als Tiefziehfolie (10 ; 110 ; 210) eine PVC-ABS-Folie verwendet wird.

5. Verfahren nach einem der Ansprüche 1 bis 4, dadurch gekennzeichnet, daß eine Tiefziehfolie (10 ; 110 ; 210) verwendet wird, welche auf ihrer Sichtseite mit einer Lackschicht (12 ; 112 ; 212), beispielsweise aus PVC-Acrylatlack, beschichtet ist.

6. Verfahren nach einem der Ansprüche 1 bis 5, dadurch gekennzeichnet, daß als Schutzfolie eine Folie (14 ; 214) verwendet wird, welche zumindest an ihrer der Sichtseite der Tiefziehfolie (10 ; 210) zugekehrten Seite einen Anteil an Äthylenvinylacetat enthält.

7. Verfahren nach Anspruch 6, dadurch gekennzeichnet, daß eine Schutzfolie (14 ; 214) verwendet wird, welche an ihrer der Sichtseite der Tiefziehfolie (10 ; 210) zugekehrten Seite aus einem Kopolymerisat von Äthylen und Äthylenvinylacetat besteht.

8. Verfahren nach einem der Ansprüche 6 oder 7, dadurch gekennzeichnet, daß eine mehrschichtige Schutzfolie (114 ; 314) verwendet wird, deren der Sichtseite der Tiefziehfolie zugekehrte Schicht (114b ; 314a) Äthylenvinylacetat enthält.

9. Verfahren nach Anspruch 8, dadurch gekennzeichnet, daß eine mehrschichtige Schutzfolie (114 ; 314) verwendet wird, deren von der Sichtseite der Tiefziehfolie abgelegene Schicht (114a ; 314b) eine hohe Weiterreßfestigkeit besitzt, z. B. aus Polyäthylen.

10. Verfahren nach einem der Ansprüche 1 bis 9, dadurch gekennzeichnet, daß die Schutzfolie (14 ; 114 ; 214 ; 314) nach vorhergehender Koronabehandlung ihrer der Tiefziehfolie (10 ; 110 ; 210) zugekehrten Seite und/oder nach vorhergehender Koronabehandlung der Sichtseite der Tiefziehfolie mit der Tiefziehfolie zusammenkaschiert wird.

11. Verfahren nach einem der Ansprüche 1 bis 10, dadurch gekennzeichnet, daß die Haftung zwischen der Schutzfolie (14 ; 114 ; 214 ; 314) und der Sichtseite der Tiefziehfolie (10 ; 110 ; 210) bzw. dem auf dieser Sichtseite aufgebrachten Lack (12 ; 112 ; 212) auf 1 bis 10 N/5 cm bei einer Abzugsgeschwindigkeit von 100 mm/Min. eingestellt wird.

12. Verfahren nach einem der Ansprüche 1 bis 11, dadurch gekennzeichnet, daß eine transparente Schutzfolie (14 ; 114 ; 214 ; 314) verwendet wird.

13. Verfahren nach einem der Ansprüche 1 bis 12, dadurch gekennzeichnet, daß eine Schutzfolie (14 ; 114 ; 214 ; 314) verwendet wird, welche die zur Aufheizung der Tiefziehfolie (10 ; 110 ; 210) vor dem Tiefziehvorgang eingesetzte, insbesondere von der Schutzfolienseite her aufgebrachte Wärmestrahlung weniger absorbiert als die Tiefziehfolie selbst.

## Claims

1. A process for the production of mouldings which consist of a thermoformed piece of thermoformable sheeting (10 ; 110 ; 210) consisting of a plastic (for example of PVC-ABS) and which are filled with foam on their back, there being applied, onto the visible side of the piece of thermoformable sheeting (10 ; 110 ; 210), a protective layer which prevents the adhesion, on the visible surface, of any foam (16a) which may be transferred onto the visible side of the thermoformable sheeting (10 ; 110 ; 210), characterised in that the protective layer is applied, in the form of a protective film (14 ; 114, 214, 314) even before thermoforming, this protective film forming an adhesive bond, which withstands the thermoforming process and the foam-filling process, with the visible side of the thermoformable sheeting (10 ; 110 ; 210), but on the other hand adheres to the thermoformable sheeting only to the extent that after the moulding has been finished the protective film (14 ; 114 ; 214 ; 314), whith any foam (16a) adhering thereto, can be peeled off the visible side again, substantially without tearing, the thickness and composition of the protective film (14 ; 114 ; 214 ; 314) being so chosen that it imparts to the laminate, consisting of a thermoformable sheeting (10 ; 110 ; 210) and the protective film (14 ; 114 ; 214 ; 314), the properties required for processing, especially rigidity, stability of grain and stability of the optical reflection properties, so that the thermoformable sheeting (10 ; 110 ; 210) can be chosen to be correspondingly thinner.

2. Process according to Claim 1, characterised in that the protective film (214) is applied to a visible side (211) of the thermoformable sheeting (210), which visible side has beforehand been provided with a fine structure, in particular by embossing.

3. Process according to Claim 1 or 2, characterised in that the thermoformable sheeting (210) is heated before thermoforming, by radiant heat, in particular including heating from the visible side, and is thereby brought to a state capable of plastic deformation.

4. Process according to one of Claims 1 to 3, characterised in that a PVC-ABS sheeting is used as the thermoformable sheeting (10 ; 110 ; 210).

5. Process according to one of Claims 1 to 4, characterised in that a thermoformable sheeting (10 ; 110 ; 210) is used which is coated on its visible side with a lacquer layer (12 ; 112 ; 212), for example a PVC/acrylate lacquer.

6. Process according to one of Claims 1 to 5, characterised in that the protective film used is a film (14 ; 214) which contains a proportion of ethylene/vinyl acetate at least on the side which faces the visible side of the thermoformable sheeting (10 ; 210).

7. Process according to Claim 6, characterised in that a protective film (14 ; 214) is used which on its side which faces the visible side of the thermoformable sheeting (10 ; 210) consists of a copolymer of ethylene and ethylene/vinyl acetate (sic).

8. Process according to one of Claims 6 or 7, characterised in that a multi-layer protective film (114 ; 314) is used, of which the layer (114b ; 314a) facing the visible side of the thermoformable sheeting contains ethylene/vinyl acetate.

9. Process according to Claim 8, characterised in that a multi-layer protective film (114 ; 314) is used, whose layer (114a ; 314b) remote from the visible side of the thermoformable sheeting has a high tear propagation resistance, and consists, for example, of polyethylene.

10. Process according to one of Claims 1 to 9, characterised in that the protective film (14 ; 114 ; 214 ; 314), after prior corona treatment of its side facing the thermoformable sheeting (10 ; 110 ; 210), and/or after prior corona treatment of the visible side of the thermoformable sheeting, is laminated to the thermoformable sheeting.

11. Process according to one of Claims 1 to 10, characterised in that the adhesion between the protective film (14 ; 114 ; 214 ; 314) and the visible side of the thermoformable sheeting (10 ; 110 ; 210) or the lacquer (12 ; 112 ; 212) applied to this visible side is adjusted to 1-10 N/5 cm at a pull-off speed of 100 mm/min.

12. Process according to one of Claims 1 to 11, characterised in that a transparent protective film (14 ; 114 ; 214 ; 314) is used.

13. Process according to one of Claims 1 to 12, characterised in that a protective film (14 ; 114 ; 214 ; 314) is used which absorbs the radiant heat, employed to heat the thermoformable sheeting (10 ; 110 ; 210) before thermoforming, and in particular applied from the protective film side, less than the thermoformable sheeting itself.

## Revendications

1. Procédé de fabrication de corps de forme qui sont composés d'une feuille à emboutir (10, 110, 210) en matière plastique (par exemple PVC-ABS) et sont garnis de mousse sur leur face arrière cependant que, sur la face visible de la feuille à emboutir (10, 110, 210), est déposée une couche protectrice qui empêche une mousse (16a) éventuellement transférée à la face visible de la feuille (10, 110, 210) d'adhérer sur la surface visible, caractérisé en ce que la couche protectrice est déposée sous la forme d'une feuille protectrice (14, 114, 214, 314) dès avant l'emboutissage, laquelle feuille établit avec la face visible de la feuille à emboutir (10, 110, 210) une liaison adhésive qui dure plus longtemps que l'opération d'emboutissage et l'opération de moussage, mais, d'autre part, n'adhère à la feuille à emboutir qu'avec une force telle qu'après la finition de la pièce de forme, la feuille protectrice (14, 114, 214, 314), avec la mousse (16a) qui y adhère, puisse cependant être détachée de la face visible avec aussi peu d'arrachements que possible, cependant que la feuille protectrice (14, 114, 214, 314) est choisie, dans son épaisseur et sa composition de matière, de manière à conférer au matériau composite constitué par la feuille à emboutir (10, 110, 210) et la feuille protectrice (14, 114, 214, 314) les propriétés nécessaires pour son travail, notamment la rigidité, la solidité de grainage et la stabilité des propriétés de réflexion optique, de sorte que la feuille à emboutir (10, 110, 210) peut être choisie d'autant plus mince.

2. Procédé suivant la revendication 1, caractérisé en ce que la feuille protectrice (214) est déposée sur une face visible (211) de la feuille à emboutir (210) qui a été préalablement munie d'une structure fine, notamment par gaufrage.

3. Procédé selon la revendication 1 ou 2, caractérisé en ce que la feuille à emboutir (210) est chauffée avant l'emboutissage, par un rayonnement thermique notamment, également par le côté de la face visible et, de cette façon, mise dans un état approprié pour la déformation plastique.

4. Procédé selon une des revendications 1 à 3, caractérisé en ce qu'on utilise comme feuille à emboutir (10, 110, 210) une feuille de PVC-ABS.

5. Procédé selon une des revendications 1 à 4, caractérisé en ce qu'on utilise une feuille à emboutir (10, 110, 210) qui est revêtue sur sa face visible d'une couche de laque (12, 112, 212), par exemple d'une laque de PVC-acrylate.

6. Procédé selon une des revendications 1 à 5, caractérisé en ce qu'on utilise comme feuille protectrice une feuille (14, 214) qui contient au moins sur sa face dirigée vers la face visible de la feuille à emboutir (10, 210) une proportion d'éthylène vinylacétate.

7. Procédé selon la revendication 6, caractérisé en ce qu'on utilise une feuille protectrice (14, 214) qui est constituée, sur sa face dirigée vers la face visible de la feuille à emboutir (10, 210), par un copolymérisat d'éthylène et d'éthylène vinylacétate.

8. Procédé selon une des revendications 6 et 7, caractérisé en ce qu'on utilise une feuille protectrice multi-couches (114, 314) dont la couche (114b, 314a) dirigée vers la face visible de la feuille à emboutir contient de l'éthylène vinylacétate.

9. Procédé selon la revendication 8, caractérisé en ce qu'on utilise une feuille protectrice multi-couche (114, 314) dont la couche (114a, 314b) qui est à l'opposé de la face visible de la feuille à emboutir possède une haute résistance à la propagation de la déchirure, est par exemple en polyéthylène.

10. Procédé selon une des revendications 1 à 9, caractérisé en ce que la feuille protectrice (14, 114, 214, 314) est assemblée à la feuille à emboutir par doublage, après traitement préalable par effet couronne de sa face dirigée vers la feuille à emboutir (10, 110, 210) et/ou après traitement préalable par effet couronne de la face visible de la feuille à emboutir.

11. Procédé selon une des revendications 1 à 10, caractérisé en ce que l'adhérence entre la feuille protectrice (14, 114, 214, 314) et la face visible de la feuille à emboutir (10, 110, 210) ou la laque (12, 112, 212) déposée sur cette face visible est réglée sur 1 à 10 N/5 cm à une vitesse de tirage 100 mm/mn.

12. Procédé selon une des revendications 1 à 11, caractérisé en ce qu'on utilise une feuille protectrice transparente (14, 114, 214, 314).

13. Procédé selon une des revendications 1 à 12, caractérisé en ce qu'on utilise une feuille protectrice (14, 114, 214, 314) qui absorbe moins le rayonnement thermique mis en œuvre pour chauffer la feuille à emboutir (10, 110, 210) avant l'opération d'emboutissage, notamment par le côté de la face de la feuille protectrice, que la feuille à emboutir elle-même.

## FIG.1

12    14

10

## FIG.2

112    114a    114b

114 {

110

## FIG.3

14

12

10

## FIG.4

14

12

16a

10

16

## FIG.5

12

10

16

1

FIG.6

FIG.6A

FIG.7

FIG.8

FIG.9